# FASCICULE DE BREVET EUROPEEN

(11) **EP 0 427 624 B1**
(45) Date de publication et mention de la délivrance du brevet: **17.01.1996**
(21) Numéro de dépôt: 90403159.8
(22) Date de dépôt: 07.11.1990
(51) Int. Cl.: C08L 27/06

(54) **Elastomère thermoplastique à base de polynorbornène et de polychlorure de vinyle**
Thermoplastisches Elastomer auf Basis von Polynorbornen und Polyvinylchlorid
Thermoplastic elastomer based on polynorbornene and polyvinyl chloride

(30) Priorité: 08.11.1989 FR 8914680
(43) Date de publication de la demande: 15.05.1991
(73) Titulaire: ELF ATOCHEM S.A., F-92800 Puteaux (FR)
(72) Inventeur: Hert, Marius, F-60550 Verneuil (FR); Dousson, Christian, F-60180 Nogent Sur Oise (FR)

(56) Documents cités:
- US-A- 4 329 270
- DATABASE WPIL,no.81-50636D,Derwent Publications
- DATABASE WPIL,no.84-267207,Derwent Publications
- DATABASE WPIL,no.86-314242,Derwent Publications

## Description

La présente invention concerne des compositions élastomères thermoplastiques comprenant des mélanges de polynorbornène réticulé et de polychlorure de vinyle.

Les polymères de relativement haut poids moléculaire sont généralement incompatibles entre eux. Lorsqu'on mélange deux polymères de nature différente, le mélange possède généralement de médiocres propriétés mécaniques telles que résistance à la rupture et allongement à la rupture. Un couple de polymères est rarement suffisamment compatible pour former un mélange possédant des propriétés mécaniques aussi bonnes que celles du moins performant d'entre eux. Cependant, lorsque deux polymères sont compatibles, le mélangé résultant peut montrer une combinaison intéressante de propriétés, c'est-à-dire que, outre de bonnes propriétés mécaniques, il peut également posséder d'autres caractéristiques favorables.

Ainsi, le brevet US-A-4 203 884 enseigne que des compositions comprenant le mélange d'une polyoléfine cristalline thermoplastique, de polynorbornène et d'une quantité de plastifiant du polynorbornène suffisante pour abaisser sa température de transition vitreuse jusqu'à la gamme des caoutchoucs possèdent des propriétés intéressantes. Plus particulièrement, ce document divulgue des compositions comprenant un mélange de 75 à 10 parties en poids de polyoléfine, de 25 à 90 parties en poids de polynorbornène et, pour 100 parties en poids de polynorbornène, de 30 à 400 parties en poids de plastifiant, lesdites compositions étant élastoplastiques, c'est-à-dire qu'elles possèdent des propriétés élastomériques tout en pouvant être transformées comme des thermoplastiques. A l'état fondu, selon cette technique, une partie du plastifiant peut se trouver présent dans la phase polyoléfine thermoplastique. Après refroidissement, le plastifiant migre substantiellement de la phase polyoléfine cristalline vers la phase polynorbornène pour faire partie de cette dernière. De la sorte, le plastifiant améliore la thermoplasticité ou la capacité de mise en oeuvre de la composition. En règle générale, pour un degré de thermoplasticité donné, la composition requiert d'autant moins de polyoléfine que la quantité de plastifiant est plus importante.

Le brevet US-A-4 203 884 divulgue également des compositions comprenant un mélange de 10 à 90 parties en poids de polyoléfine cristalline et de 90 à 10 parties en poids de polynorbornène réticulé dispersé sous forme de particules de petite taille, et de plastifiant en quantité suffisante pour abaisser la température de transition vitreuse du polynorbornène jusqu'à la gamme des caoutchoucs. Ainsi la réticulation du polynorbornène améliore le compromis des propriétés de la composition, en particulier la résistance à la rupture, la résistance aux solvants et les propriétés à haute température. De telles compositions sont obtenues par un procédé de vulcanisation dynamique selon lequel un mélange de polynorbornène, de plastifiant, de polyoléfine et de réticulants est malaxé à une température suffisante pour réticuler le polynorbornène.

Parmi les polyoléfines cristallines thermoplastiques utilisables selon le brevet US-A-4 203 884, on peut citer le polyéthylène et le polypropylène, ce dernier étant préféré comme le confirme la comparaison des résultats illustrés par les tableaux 1 et 2 du document cité. Plus particulièrement, ce document enseigne que des compositions comprenant de 20 à 70 parties en poids de polynorbornène réticulé, de 80 à 30 parties en poids de polypropylène et une quantité suffisante de plastifiant du polynorbornène possèdent :
- une dureté Shore A au moins égale à 73 ou bien une dureté Shore D,
- une résistance à la rupture (déterminée selon la norme ASTM D 1708-66) entre 10 et 23 MPa,
- un taux de gonflement volumique dans l'huile ASTM 3, mesuré selon la norme ASTM D471, après 166 heures à 70°C, supérieur à 35% ;
- un allongement à la rupture (déterminé selon la norme ASTM D 1708-66) entre 90 et 290%, et
- un module à 100% d'allongement entre 4,5 et 20,9 MPa.

Le compromis de propriétés qui vient d'être décrit pour ces compositions de l'art antérieur n'est pas satisfaisant pour la plupart des applications des élastomères thermoplastiques : la dureté Shore, la résistance à la rupture et le module à 100% d'allongement sont trop élevés, tandis que l'allongement à la rupture est trop faible. Ainsi le problème que la présente invention vise à résoudre consiste à mettre au point des compositions élastomères thermoplastiques à base de polynorbornène réticulé possédant au moins l'une des propriétés, de préférence toutes les propriétés suivantes :
- une dureté Shore A ne dépassant pas 65 environ,
- une déformation rémanente à la compression, après 22 heures à 70°C, ne dépassant pas 45% environ,
- un allongement à la rupture, selon la norme ASTM D 1708,d'au moins 230% environ, et
- un module à 100% d'allongement ne dépassant pas 3,5 MPa environ,
- un taux de gonflement volumique dans l'huile ASTM 3 inférieur à 20% environ.

La demanderesse a mis en évidence le fait que cet objectif peut être atteint en ayant recours à un polymère à base de chlorure de vinyle en mélange en certaines proportions avec le polynorbornène réticulé.

La présente invention a donc pour objet une composition comprenant un mélange d'environ 20 à 70 parties en poids de polynorbornène réticulé, d'environ 80 à 30 parties en poids d'un polymère à base de chlorure de vinyle et d'au moins un plastifiant commun au polynorbornène et au polymère à base de chlorure de vinyle, en quantité suffisante pour abaisser la température de transition vitreuse du polynorbornène jusqu'à la gamme des caoutchoucs.

Par "polymère à base de chlorure de vinyle" au sens de la présente invention, on entend un polymère comprenant au moins 90 % en moles de motifs dérivés du chlorure de vinyle et, le cas échéant, jusqu'à 10 % en moles de motifs dérivés d'un monomère copolymérisable avec le chlorure de vinyle, tel que par exemple, l'acétate de vinyle ou encore un polymère de chlorure de vinyle ayant subi un traitement de chloration catalytique lui procurant un taux de chlore pouvant aller jusqu'à 72 % en poids.

Par polynorbornène au sens de la présente invention, on entend un polymère ou copolymère amorphe du bicyclo [2,2,1] heptène-2 et de ses dérivés substitués tels que décrits dans le brevet US-A-3 676 390. Le troisième composant de la composition selon l'invention est un composé ayant la caractéristique d'être connu à la fois comme un plastifiant du polynorbornène et comme un plastifiant des polymères à base de chlorure de vinyle, cette caractéristique lui permettant d'assurer une bonne compatibilité entre les deux polymères. Des exemples de tels plastifiants sont constitués par les diesters de l'acide phtalique et d'alcools ayant de 4 à 13 atomes de carbone, tels que les phtalates de dioctyle, de diisooctyle, de didécyle, de dinonyle, de didodécyle et leurs isomères. Le plastifiant commun au polynorbornène et au polymère à base de chlorure de vinyle est généralement utilisé à raison d'au moins 15 parties en poids environ, de préférence, 15 à 120 parties en poids environ pour 100 parties de mélange de polynorbornène et de polymère à base de chlorure de vinyle.

Dans les compositions élastomères thermoplastiques selon l'invention, le polynorbornène plastifié réticulé, par un procédé de vulcanisation dynamique, se présente avantageusement sous forme de petites particules dispersées, ce qui permet à la composition d'être transformée et mise en oeuvre comme n'importe quel matériau thermoplastique.

Tout système de réticulation adapté pour la vulcanisation de caoutchouc diéniqùe peut être utilisé pour la réticulation du polynorbornène dans les compositions thermoplastiques selon l'invention. Parmi les agents réticulants satisfaisants pour les caoutchoucs, on peut citer les agents de vulcanisation à base de soufre, de peroxyde, de résine phénolique, de composés azo, maléimido, quinoïde et uréthane, tels que, par exemple, du soufre libre ou des composés donneurs de soufre comme le disulfure de tétraméthythiurame, le disulfure de thiurame, le disulfure de benzothiazyle et l'hexasulfure de dipentaméthylène thiurame, ou encore la m-phénylène bis-maléimide, la benzoquinone dioxime, le peroxyde de plomb, la diorthotolyl guanidine, la 4,4'-dithiodimorpholine, etc. Ces agents de vulcanisation peuvent être avantageusement utilisés en association avec au moins un activateur ou accélérateur de vulcanisation, tel que l'oxyde de zinc, l'oxyde de magnésium, le benzothiazole sulfamide, le chlorure d'étain, le dibutyldithiocarbamate de zinc, le phényléthyldithiocarbamate de zinc, l'éthyldithiocarbamate de tellure, le polyéthylène chlorosulfoné, etc. Lorsque du soufre libre ou un composé donneur de soufre est utilisé comme agent de vulcanisation, il est préférable d'utiliser une quantité importante d'activateur ou accélérateur de vulcanisation, c'est-à-dire, par exemple, un poids d'activateur ou accélérateur compris entre 1 et 3 fois environ le poids d'agent de vulcanisation.

Les constituants du système de réticulation, et notamment l'agent de vulcanisation, sont utilisés dans les proportions usuelles connues de l'homme de l'art pour obtenir la réticulation quasi-complète du polynorbornène sans pour autant réduire son élasticité au point qu'il ne soit plus caoutchouteux. Dans les compositions thermoplastiques selon l'invention, le polynorbornène est de préférence réticulé jusqu'au point où pas plus de 10%, de préférence pas plus de 5%, du polynorbornène puisse être extrait par un solvant, tel que le xylène bouillant, dans lequel le polynorbornène non-réticulé est complètement soluble.

Le polymère à base de chlorure de vinyle utilisé dans les compositions selon la présente invention possède de préférence un indice de viscosité en solution dans la cyclohexanone à 1% et 20°C, mesuré selon la norme NF T 51013, compris entre 50 et 100. Il peut également contenir, de manière connue en soi, au moins un stabilisant, au moins un capteur d'acide chlorhydrique tel qu'un sel de calcium, baryum, zinc ou étain, au moins un agent de protection contre le rayonnement ultraviolet, et/ou au moins un agent d'ignifugation. Il peut également contenir jusqu'à 10% en poids d'une charge telle que l'oxyde de titane, le noir de carbone, etc. Il peut contenir un plastifiant secondaire associé au diester phtalique, tel que l'huile de soja époxydée, ou une paraffine chlorée à raison d'au plus 20% en poids.

Les compositions selon la présente invention peuvent en outre comprendre :
- au moins un second plastifiant du polynorbornène tel qu'une huile lourde aromatique, naphténique ou paraffinique dérivée du pétrole, de point de congélation inférieur à 0°C et de point éclair supérieur à 180°C. La quantité de second plastifiant utilisé dépend, de toute évidence, de la quantité de plastifiant commun au polynorbornène et au polymère à base de chlorure de vinyle déjà introduite dans la composition. Elle est généralement comprise entre 0 et 300 parties en poids pour 100 parties de polynorbornène,
- au moins un polymère miscible avec le polymère à base de chlorure de vinyle, tel que le caoutchouc nitrile, le polyéthylène chloré, un copolymère éthylène/acétate de vinyle comprenant jusqu'à 50% en poids d'acétate, un latex acrylique (défini comme étant constitué de particules d'élastomère à base d'acrylate d'alkyle (par exemple butyle) partiellement réticulé, entourées d'une couche dure à base de polyméthacrylate de méthyle), etc. Ce polymère peut être présent dans une proportion allant jusqu'à 60 parties en poids pour 100 parties de polymère à base de chlorure de vinyle.

Les propriétés des compositions selon l'invention peuvent être avantageusement modifiées, pour les besoins de certains usages particuliers, par l'addition d'ingrédients conventionnels tels que :
- pigments blancs (oxyde de titane) ou colorés,
- agents de couplage, tels que silanes ou titanates,
- antidégradants tels que, par exemple, le sel de zinc du mercaptobenzimidazole,
- stabilisants, tels que, par exemple, la 2,2,4-tri-méthyl-1,2-dihydroquinoléine polymérisée,
- adjuvants de mise en oeuvre, tels que des amines aliphatiques à chaîne longue, des sels de l'acide stéarique, etc.
- charges pulvérulentes, telles que noir de carbone, silice, kaolin, alumine, argile, alumino-silicate, talc, carbonate, et
- lubrifiants, tels que l'acide stéarique.

En particulier, l'addition de charges pulvérulentes a pour effet d'améliorer la résistance à la rupture et, dans certains cas, l'allongement à la rupture de la compositiom élastomère thermoplastique selon l'invention. La quantité de charge pouvant être incorporée à la composition peut atteindre jusqu'à 150 parties pour 100 parties en poids de polynorbornène, cette quantité étant bien évidemment variable selon la nature de la charge.

Les compositions élastomères thermoplastiques selon l'invention, dans lesquelles le polynorbornène est réticulé, sont de préférence préparées par vulcanisation dynamique, c'est-à-dire en malaxant un mélange de polynorbornène, de polymère à base de chlorure de vinyle, de plastifiant commun à ces deux polymères et de système de réticulation (tel que défini ci-dessus) à une température suffisante et pendant une durée suffisante pour réticuler le polynorbornène. Le malaxage peut être effectué dans un appareillage conventionnel tel que par exemple un malaxeur Banbury, un malaxeur Brabender, un malaxeur Rhéocord ou une extrudeuse, à des températures comprises entre 110°C et 220°C environ pendant une durée comprise entre 3 et 15 minutes environ, cette durée étant d'autant moins longue que la température de la matière est plus élevée. Avant cette étape de malaxage, le mélange peut être d'abord homogénéisé dans un mélangeur interne à température modérée comprise entre 40° et 100°C environ.

Les compositions selon l'invention peuvent être utilisées pour fabriquer des produits finis et articles industriels par les techniques d'extrusion, d'injection-moulage et de moulage par compression. Des applications concrètes des compositions selon l'invention comprennent notamment des tuyaux souples, des joints pour les industries du bâtiment et de l'automobile, des soufflets de protection pour l'industrie automobile, des articles injectés, tels que des roues pleines pour l'industrie du jouet, etc.

Les exemples ci-après sont donnés à titre illustratif et non limitatif de la présente invention.

### EXEMPLES 1 à 3

Dans une première étape, du polynorbornène commercialisé par la demanderesse sous la dénomination NORSOREX^{®} est formulé avec un plastifiant 2 (huile pétrolière naphténique de point éclair égal à 195°C, commercialisée par la Société TEXACO sous la dénomination DEALEN RD 25), du dioctyl phtalate, un lubrifiant (acide stéarique ), un antioxydant (commercialisé par la Société CIBA-GEIGY sous la dénomination IRGANOX 1010), une charge pulvérulente (kaolin calciné), un agent de vulcanisation (mélange équimolaire de dithiodimorpholine et de disulfure de tétraméthylthiurame), un stabilisant (commercialisé par la Société BAYER sous la dénomination VULKALENT E) et un accélérateur de vulcanisation (mélange d'oxyde de zinc, de dibutyldithiocarbamate de zinc, de phényldithiocarbamate de zinc et d'éthyldithiocarbamate de tellure dans des rapports pondéraux 3/2/0,5/1) dans un mélangeur à poudre PAPENMEIER tournant à 350 tours par minute, pendant 20 minutes à la température allant de 25°C à 60°C. Dans une seconde étape, un polychlorure de vinyle de granulométrie inférieure à 250µm et d'indice de viscosité en solution dans la cyclo-hexanone à 1% et 20°C (mesuré selon la norme NF T 51013) égal à 70, commercialisé par la société LIBURGSE VINYL MAATSCHAPPIJ sous la dénomination MARVYLAN S 7102, est plastifié dans le même mélangeur au moyen de dioctylphtalate pendant 5 minutes à la température allant de 25°C à 110°C. Dans une troisième étape, le polynorbornène formulé est mélangé avec le polychlorure de vinyle plastifié dans un malaxeur MIELLI tournant à 60 tours par minute et régulé à la température de 120°C pendant 8 minutes. La composition résultante est récupérée et moulée en plaques de 2,5 mm par compression, sur lesquelles on mesure les propriétés suivantes :
- dureté Shore A déterminée selon la norme ASTM-D 2240,
- allongement à la rupture, exprimé en % et déterminé selon la norme ASTM-D 412,
- déformation rémanente à la compression (DRC) pendant 22 heures à 70°C, mesurée sur des plots de 12,5 mm écrasés de 25%, déterminée selon la norme ASTM-D-395 et exprimée en %,
- le module à 100% d'allongement, exprimé en MPa et déterminé selon la norme ASTM D 412, et
- le taux de gonflement volumique après un séjour de 166 heures à 70°C dans l'huile référencée ASTM 3, déterminé selon la norme ASTM D 471.

Les quantités pondérales des divers ingrédients de la composition sont indiquées dans le tableau ci-après, ainsi que les résultats des mesures de propriétés effectuées comme décrit ci-dessus.

**TABLEAU**

| Exemple | 1 | 2 | 3 |
|---|---|---|---|
| Polynorbornène | 66 | 46 | 26 |
| Dioctylphtalate | 70 | 64 | 58 |
| Plastifiant 2 | 81 | 55 | 31 |
| Charge | 67 | 46 | 26 |
| Agent de vulcanisation | 2,0 | 1,4 | 0,8 |
| Accélérateur de vulcanisation | 4,9 | 3,4 | 2,0 |
| Stabilisant | 0,7 | 0,5 | 0,3 |
| Antioxydant | 0,7 | 0,5 | 0,3 |
| Lubrifiant | 0,3 | 0,2 | 0,1 |
| Polychlorure de vinyle | 34 | 54 | 74 |
| Dureté Shore A | 38 | 50 | 63 |
| Allongement à la rupture | 520 | 350 | 230 |
| module 100% | 0,9 | 1,9 | 3,5 |
| DRC | 20 | 30 | 41 |
| Gonflement volumique | n.d. | 10 | -10 |

n.d. non déterminé

Le taux de gonflement volumique négatif observé à l'exemple 3 signifie que l'huile ASTM 3 a extrait une partie du plastifiant de la composition.

## Revendications

1. Composition élastomère thermoplastique obtenue par vulcanisation dynamique comprenant un mélange de 20 à 70 parties en poids de polynorbornène plastifié et réticulé, de 80 à 30 parties en poids d'un polymère à base de chlorure de vinyle et d'au moins un plastifiant commun au polynorbornène et au polymère à base de chlorure de vinyle, en quantité suffisante pour abaisser la température de transition vitreuse du polynorbornène jusqu'à la gamme des caoutchoucs.

2. Composition élastomère thermoplastique selon la revendication 1, caractérisée en ce que le polynorbornène est réticulé jusqu'au point où pas plus de 10% du polynorbornène puisse être extrait par un solvant.

3. Composition selon l'une des revendications 1 et 2, caractérisée en ce que le polymère à base de chlorure de vinyle est un polymère comprenant au moins 90% en moles de motifs dérivés du chlorure de vinyle et, le cas échéant, jusqu'à 10% en moles de motifs dérivés d'un monomère copolymérisable avec le chlorure de vinyle, ou bien un polymère de chlorure de vinyle ayant subi un traitement de chloration catalytique lui procurant un taux de chlore pouvant aller jusqu'à 72% en poids.

4. Composition élastomère thermoplastique selon l'une des revendications 1 à 3, caractérisée en ce qu'elle comprend en outre au moins un additif choisi parmi les pigments blancs ou colorés, les agents de couplage, les antidégradants, les stabilisants, les adjuvants de mise en oeuvre, les charges pulvérulentes et les lubrifiants.

5. Composition élastomère thermoplastique selon la revendication 4, caractérisée en ce que ledit additif est une charge pulvérulente utilisée à raison de jusqu'à 150 parties pour 100 parties en poids du polynorbornène.

6. Composition selon l'une des revendications 1 à 5, caractérisée en ce que le plastifiant commun au polynorbornène et au polymère à base de chlorure de vinyle est un diester de l'acide phtalique et d'alcools ayant de 4 à 13 atomes de carbone.

7. Composition selon l'une des revendications 1 à 6, caractérisée en ce que le plastifiant commun au polynorbornène et au polymère à base de chlorure de vinyle est présent à raison d'au moins 15 parties en poids pour 100 parties de mélange de polynorbornène et de polymère à base de chlorure de vinyle.

8. Composition selon l'une des revendications 1 à 7, caractérisée en ce qu'elle comprend en outre au moins un second plastifiant du polynorbornène tel qu'une huile lourde aromatique, naphténique ou paraffinique dérivée du pétrole, de point de congélation inférieur à 0°C et de point éclair supérieur à 180°C.

9. Composition selon l'une des revendications 1 à 8, caractérisée en ce qu'elle comprend en outre au moins un polymère miscible avec le polymère à base de chlorure de vinyle.

10. Procédé de préparation d'une composition élastomère thermoplastique selon la revendication 1, caractérisé en ce qu'on malaxe un mélange de polynorbornène, éventuellement d'un second plastifiant du polynorbornène de polymère à base de chlorure de vinyle, de plastifiant commun au polynorbornène et au polymère à base de chlorure de vinyle et d'un système de réticulation à une température suffisante et pendant une durée suffisante pour réticuler le polynorbornène.

11. Procédé selon la revendication 10, caractérisé en ce que le mélange est effectué à des températures comprises entre 110°C et 220°C.

## Claims

1. Thermoplastic elastomer composition obtained by dynamic vulcanization, including a mixture of 20 to 70 parts by weight of plasticized and crosslinked polynorbornene, of 80 to 30 parts by weight of a vinyl chloride-based polymer and of at least one plasticizer common to polynorbornene and to the vinyl chloride-based polymer, in sufficient quantity to lower the glass transition temperature of the polynorbornene to the rubber range.

2. Thermoplastic elastomer composition according to Claim 1, characterized in that the polynorbornene is crosslinked to the point where not more than 10 % of the polynorbornene can be extracted with a solvent.

3. Composition according to either of Claims 1 and 2, characterized in that the vinyl chloride-based polymer is a polymer containing at least 90 mol% of units derived from vinyl chloride and, if appropriate, up to 10 mol% of units derived from a monomer which is copolymerizable with vinyl chloride, or else a vinyl chloride polymer which has undergone a catalytic chlorination treatment giving it a chlorine content which may range up to 72 % by weight.

4. Thermoplastic elastomer composition according to one of Claims 1 to 3, characterized in that it additionally includes at least one additive chosen from white or coloured pigments, coupling agents, antidegradants, stabilizers, processing aids, pulverulent fillers and lubricants.

5. Thermoplastic elastomer composition according to Claim 4, characterized in that the said additive is a pulverulent filler employed in a proportion of up to 150 parts per 100 parts by weight of the polynorbornene.

6. Composition according to one of Claims 1 to 5, characterized in that the plasticizer common to the polynorbornene and to the vinyl chloride-based polymer is a diester of phthalic acid and of alcohols containing from 4 to 13 carbon atoms.

7. Composition according to one of Claims 1 to 6, characterized in that the plasticizer common to the polynorbornene and to the vinyl chloride-based polymer is present in a proportion of at least 15 parts by weight per 100 parts of mixture of polynorbornene and of vinyl chloride-based polymer.

8. Composition according to one of Claims 1 to 7, characterized in that it additionally includes at least one second plasticizer for the polynorbornene, such as an aromatic, naphthenic or paraffinic heavy oil derived from petroleum, with a freezing point lower than 0°C and a flash point higher than 180°C.

9. Composition according to one of Claims 1 to 8, characterized in that it additionally includes at least one polymer which is miscible with the vinyl chloride-based polymer.

10. Process for the preparation of a thermoplastic elastomer composition according to Claim 1, characterized in that a mixture of polynorbornene, optionally of a second plasticizer for the polynorbornene, of vinyl chloride-based polymer, of plasticizer common to the polynorbornene and to the vinyl chloride-based polymer and of a crosslinking system is compounded at a sufficient temperature and for a sufficient period to crosslink the polynorbornene.

11. Process according to Claim 10, characterized in that the mixing is performed at temperatures of between 110°C and 220°C.

## Patentansprüche

1. Durch dynamische Vulkanisation erhaltene, thermoplastische Elastomerenzusammensetzung, enthaltend eine Mischung aus 20 bis 70 Gewichtsteilen plastifizierten und vernetzten Polynorbornen, 80 bis 30 Gewichtsteilen eines Polymeren auf Basis von Vinylchlorid und mindestens einem für das Polynorbornen und das Polymere auf Basis von Vinylchlorid gemeinsamen Weichmacher in einer Menge, die ausreicht, um die Glasübergangstemperatur des Polynorbomens bis in den Bereich von Kautschuken abzusenken.

2. Thermoplastische Elastomerenzusammensetzung nach Anspruch 1, dadurch gekennzeichnet, daß das Polynorbornen so weit vernetzt ist, daß nicht mehr als 10 % des Polynorbornens durch ein Lösemittel extrahiert werden können.

3. Zusammensetzung nach einem der Ansprüche 1 und 2, dadurch gekennzeichnet, daß das Polymer auf Basis von Vinylchlorid ein Polymer ist, das mindestens 90 Mol-% Einheiten, die vom Vinylchlorid abgeleitet sind, und gegebenenfalls bis zu 10 Mol-% Einheiten, die sich von einem mit Vinylchlorid copolymerisierbaren Monomer ableiten, oder auch ein Polymer des Vinylchlorids, das nach katalytischer Chlorierung einen Chlorgehalt bis zu 72 Gew.-% aufweisen kann, enthält.

4. Thermoplastische Elastomerenzusammensetzung nach einem der Ansprüche 1 bis 3, dadurch gekennzeichnet, daß sie außerdem mindestens ein Additiv enthält, ausgewählt aus weißen oder farbigen Pigmenten, Kupplungsmitteln, Zerfallsinhibitoren, Stabilisatoren, Hilfsstoffen, pulverförmigen Füllstoffen und Gleitstoffen.

5. Thermoplastische Elastomerenzusammensetzung nach Anspruch 4, dadurch gekennzeichnet, daß dieses Additiv ein pulverförmiger Füllstoff ist, der in einer Menge von bis zu 150 Gewichtsteilen auf 100 Gewichtsteile des Polynorbornens verwendet wird.

6. Zusammensetzung nach einem der Ansprüche 1 bis 5, dadurch gekennzeichnet, daß der für das Polynorbornen und das Polymere auf Basis von Vinylchlorid gemeinsame Weichmacher ein Diester der Phthalsäure mit Alkoholen ist, die 4 bis 13 Kohlenstoffatomen besitzen.

7. Zusammensetzung nach einem der Ansprüche 1 bis 6, dadurch gekennzeichnet, daß der für das Polynorbornen und das Polymere auf Basis von Vinylchlorid gemeinsame Weichmacher in einer Menge von mindestens 15 Gewichtsteilen auf 100 Gewichtsteile der Mischung aus Polynorbornen und dem Polymeren auf Basis von Vinylchlorid vorhanden ist.

8. Zusammensetzung nach einem der Ansprüche 1 bis 7, dadurch gekennzeichnet, daß sie außerdem mindestens einen zweiten Weichmacher des Polynorbornens enthält wie ein schweres, aromatisches, naphthenhaltiges oder paraffinisches Öl, das sich vom Petroleum ableitet, mit einem Erstarrungspunkt unterhalb von 0 °C und einem Flammpunkt oberhalb von 180 °C.

9. Zusammensetzung nach einem der Ansprüche 1 bis 8, dadurch gekennzeichnet, daß sie außerdem mindestens ein Polymer enthält, das mit dem Polymeren auf Basis von Vinylchlorid mischbar ist.

10. Verfahren zur Herstellung einer thermoplastischen Elastomerenzusammensetzung nach Anspruch 1, dadurch gekennzeichnet, daß man eine Mischung aus Polynorbornen, gegebenenfalls einem zweiten Weichmacher des Polynorbornens, einem Polymeren auf Basis von Vinylchlorid, einem für das Polynorbornen und das Polymere auf Basis von Vinylchlorid gemeinsamen Weichmacher und einem Vernetzungssystem bei einer ausreichenden Temperatur und während einer ausreichenden Dauer durchmischt, um das Polynorbornen zu vernetzen.

11. Verfahren nach Anspruch 10, dadurch gekennzeichnet, daß die Mischung bei Temperaturen zwischen 110 und 220°C durchgeführt wird.
